# EUROPEAN PATENT APPLICATION

(11) **EP 2 789 768 A1**
(43) Date of publication of application: **15.10.2014**
(21) Application number: 14162792.7
(22) Date of filing: 31.03.2014
(51) Int. Cl.: E04G 9/02

(54) **Formwork panel**

(30) Priority: 08.04.2013 GB 201306247
(71) Applicant: Acrow Formwork (N.I.) Limited, Dungannon County, Tyrone BT70 1NJ (GB)
(72) Inventor: McGahan, Terence, Dungannon, County Tyrone BT70 1NJ (GB)
(74) Representative: Waller, Stephen

(57) **Abstract**

A formwork panel comprising at least one covering sheet comprising a concrete engaging front face, the at least one covering sheet being supported on a frame secured on a rear side thereof to support and reinforce the sheet, said frame comprising first and second elongate, spaced apart and substantially parallel side rails and first and second elongate, spaced apart and substantially parallel end rails, said first and second side rails and first and second end rails defining, between them, a peripheral boundary of the frame, respective ends of said first and second side rails being joined to respective ends of said first and second ends rails by respect corner members, each corner member defining a corner region of the frame.

## Description

This invention relates to a formwork panel for use in the construction industry, in particular in casting concrete structures in situ.

Concrete structures, in particular walls and floors of a building, are typically formed in situ using a formwork system comprising an arrangement of rectangular formwork panels assembled and arranged such that a void is formed between the outer faces of opposing panels to define a form into which uncured concrete may be poured, typically after locating an arrangement of steel reinforcing rods into the void between the panels.

Historically, concrete forms were assembled in situ from wooden planks and beams to define a single use form into which concrete was poured, the formwork being broken up and scrapped once the concrete had cured. More recently formwork systems have been developed comprising re-usable formwork panels. Such reusable formwork panels typically comprise a rectangular sheet defining a concrete engaging face, such sheet typically being formed from plywood or similar sheet material, the sheet being supported on a frame secured on a rear side thereof to support and reinforce the sheet. The frame typically comprises an arrangement of steel or aluminium beams or rails welded together, the beams, in particular those forming the periphery of the frame, being shaped or formed to receive fasteners, brackets, struts or other fittings to enable the formwork panels to be joined together and mounted in the required positions to define the desired form.

The two major advantages of such known re-usable formwork systems are speed of construction of the formwork and low life-cycle costs compared to traditional single use wooden formwork. The strong and durable frame of each panel enables the panel to be reused numerous times, if not indefinitely, while the sheet covering can be readily replaced when required.

A problem with such known re-usable formwork panels is damage to the frame of the panels during handling of the panels, in particular in respect of the corner regions of the rectangular panel. Typically the ends of the beams or rails of the frame of each panel are joined together at each corner region of the panel by welding and such welds are prone to damage from impacts, leading to failure of the welds and collapse of the frame.

According to a first aspect of the present invention there is provided a formwork panel comprising at least one covering sheet comprising a concrete engaging front face, the at least one covering sheet being supported on a frame secured on a rear side thereof to support and reinforce the sheet, said frame comprising first and second elongate, spaced apart and substantially parallel side rails and first and second elongate, spaced apart and substantially parallel end rails, said first and second side rails and first and second end rails defining, between them, a peripheral boundary of the frame, respective ends of said first and second side rails being joined to respective ends of said first and second ends rails by respect corner members, each corner member defining a corner region of the frame.

By forming the corner regions of the frame from separate corner members joined to adjacent ends of the side and end rails the corners of the frame are reinforced and protected when compared to known formwork panels, and the joins between the side and end rails and the corner members are protected from damage.

Preferably each corner member comprises a casting. Each corner member may be made from a metal, such as steel or aluminium, or a plastic. In one embodiment, each of said first and second side rails and first and second end rails are formed from a metal, preferably via an extrusion or roll forming process, said corner members comprising metal castings, wherein the respective ends of the first and second side rails and first and second ends rails are joined to the respective corner members by welding.

In an alternative embodiment said first and second side rails, first and second end rails and/or the corner members may be formed from a plastic.

Each corner member may comprise a substantially L shaped block having perpendicularly arranged end regions shaped and dimensioned to be received within the adjacent ends of respective side and end rails of the frame in the manner of a plug and socket to facilitate coupling of the corner members to the side and end rails.

A least one corner region of each corner member defining an outer corner of the frame, preferably adjacent a rear or lower face thereof, may be chamfered. Additionally, or alternatively each corner member may be provided with a hole or aperture therethrough for the insertion of ties or similar fastening means for securing adjacent panels together.

An upstanding peripheral lip may be provided adjacent to an outer side of each corner member for protecting an outer edge of said at least one covering sheet. Preferably the first and second side rails and first and second end rails define a front face for supporting said covering sheet, said front face being provided with a peripheral lip extending along an outer edge thereof in alignment with said peripheral lip of the corner member, wherein said at least one covering sheet may rest against the frame within a protective boundary defined by the peripheral lips of said first and second side rails, first and second end rails and corner members, thus protecting an outer edge of said at least one covering sheet.

Preferably said first and second side rails and first and second end rails and/or said corner members are provided with apertures and/or channels and/or grooves or other formations for the attachment of fasteners, clamps, props or other fixing means or components to enable adjacent panels to be joined together or attached to lifting or handling means or supports and/or to enable the at least one covering sheet to be secured to the frame.

Formwork panels in accordance with preferred embodiments of the present invention will now be described, by way of example only, with reference to the accompanying drawings, in which :-
Figure 1 is a perspective view of concrete form comprising an assembly of formwork panels in accordance with a first embodiment of the present invention;
Figure 2 is a perspective view of a formwork panel of Figure 1;
Figure 3 is a detailed perspective view from below of a corner of the frame of the panel of Figure 2;
Figure 4 is a detailed perspective view from above of a corner of the frame of Figure 2;

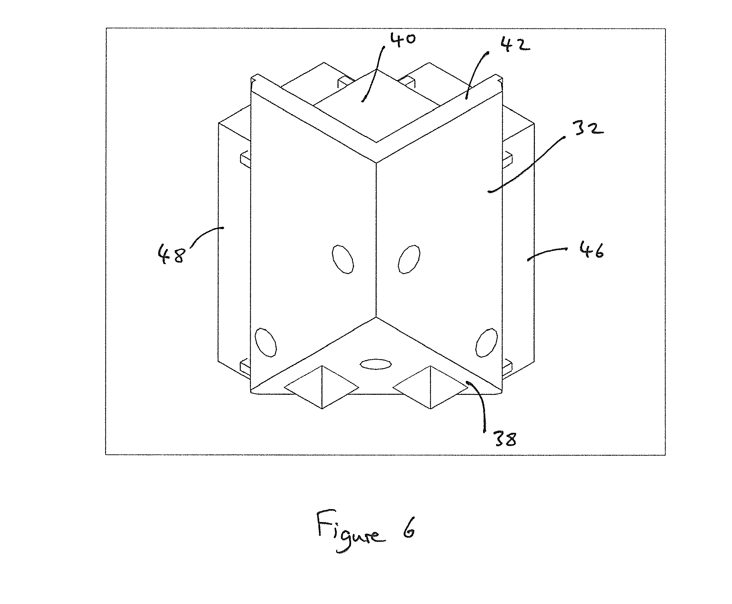

Figures 5 and 6 are detailed perspective views of a corner block of the panel of Figure 2;
Figure 7 is a detailed perspective view from above of a corner portion of the frame of a formwork panel in accordance with a modified embodiment of the present invention;
Figure 8 is a detailed perspective view from below of a corner portion of the frame of Figure 7; and
Figures 9 and 10 are detailed perspective view of a corner block of the frame of Figure 6.

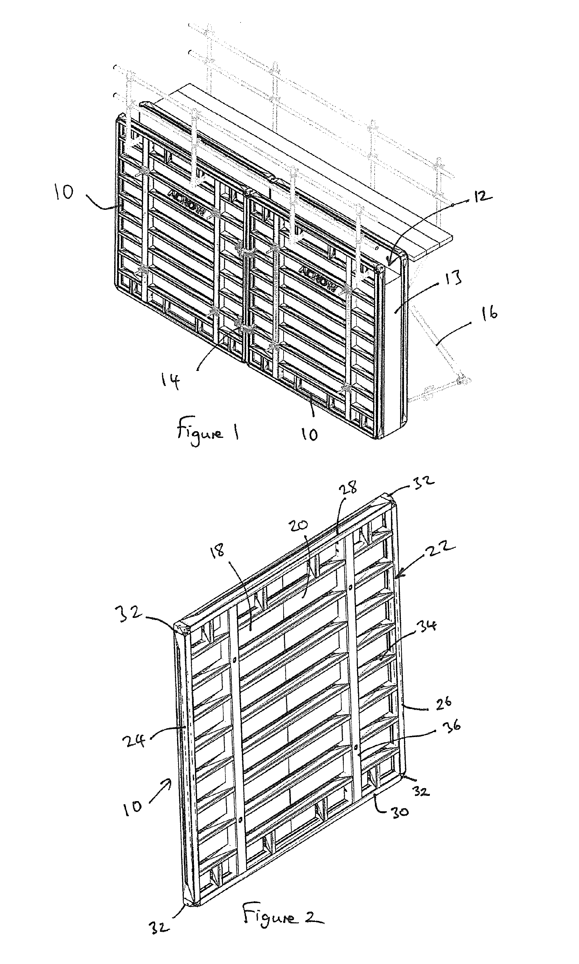

A concrete form assembled from a plurality of formwork panels 10 in accordance with an embodiment of the present invention is illustrated in Figure 1. In the example shown in Figure 1, four formwork panels 10 are joined together in pairs to define between then a cavity 12 within which a concrete wall 13 may be formed, the panels 10 being joined together by clamps 14 and supported by props 16, as is known in the art. Opposing panels may be connected together by elongate tie bars extending through aligned tie holes formed in the panels.

Figure 2 illustrates a formwork panel 10 in accordance with an embodiment of the present invention, the panel comprising a pair of rectangular plywood covering sheets 18,20 presenting a concrete engaging front face, the sheets 18,20 being mounted side by side on a support frame 22 secured to a rear face of the sheets 18,20 to support and reinforce the sheet 18,20.

The support frame 22 comprises a rectangular framework defined by first and second spaced apart and parallel outer side rails 24,26 and first and second spaced apart and parallel outer end rails 28,30, the side and end rails being joined to one another by corner blocks 32 located at each of the four corners of the frame, each corner block 31 forming a corner region of the frame 22 and being joined to adjacent ends of respective end and side rails 24,26,28,30.

A plurality of further bracing rails 34 are provided extending between the side rails 24,26 extending parallel to the ends rails 28,30, a pair of elongate bracing rails 36 extending between the end rails 28,30, parallel to the side rails 24,26. Some or all of the bracing rails 26 may be omitted in smaller versions of the panels.

Apertures, grooves or channels or other formations may be provided in the end and side rails 24,26,28,30 and the bracing rails 34,36 for the attachment of further components and fastening devices.

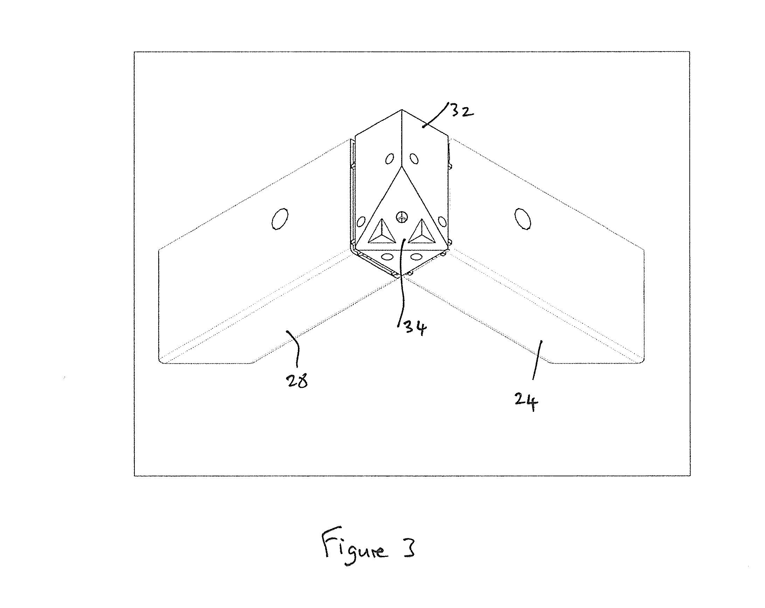

As shown in Figure 3, an outer corner 34 of each corner block 32, adjacent a rear face of the frame, is chamfered to increase the surface area of the outer corner 34 of the frame 22, reducing the risk of damage from impacts, both to the frame 22 and to object against which the corner of the frame may impact.

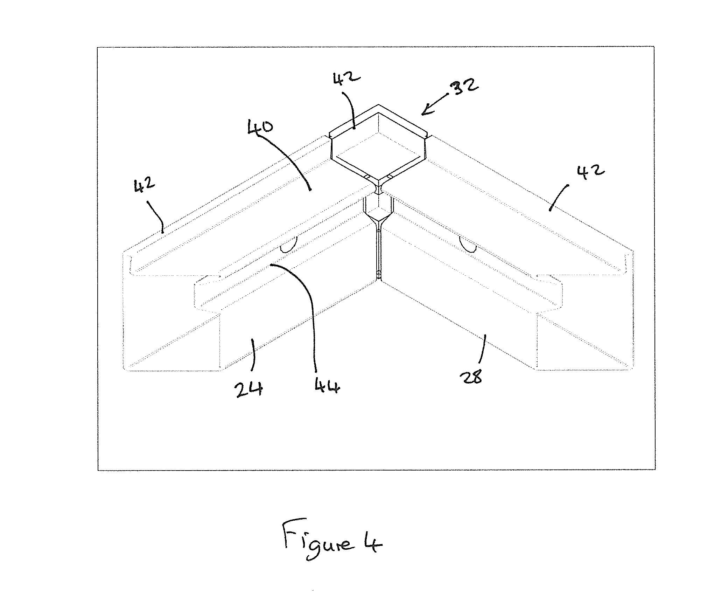

A best shown in Figure 4, the first and second side rails 24,26 and first and second end rails 28,30 and the corner blocks 32 define, between them, an outer support face 40 for supporting the covering sheets 18,20 thereon. An upstanding peripheral lip 42 is formed on the side and end rails 24,26,28,30 and corner blocks 32 to define a continuous lip around the boundary of the frame 22 within which the covering sheets 18,20 may sit, said lip 42 protecting the outer edges of the covering sheets 18,20. An upper edge of the lip 42 and/or the side edges of the outer support face 40 may be tapered to allow better weld penetration and to allow simple welding methods to be used with less cleaning and grinding needed after the welding process. A channel 44 is defined within an inner side of the end and side members 24,26,28,30, beneath the support face 40 thereof, to allow the attachment of clamps for securing/connecting the formwork panels together. Support faces 40 allow for securing the covering sheets 18,20 to the frame22 .

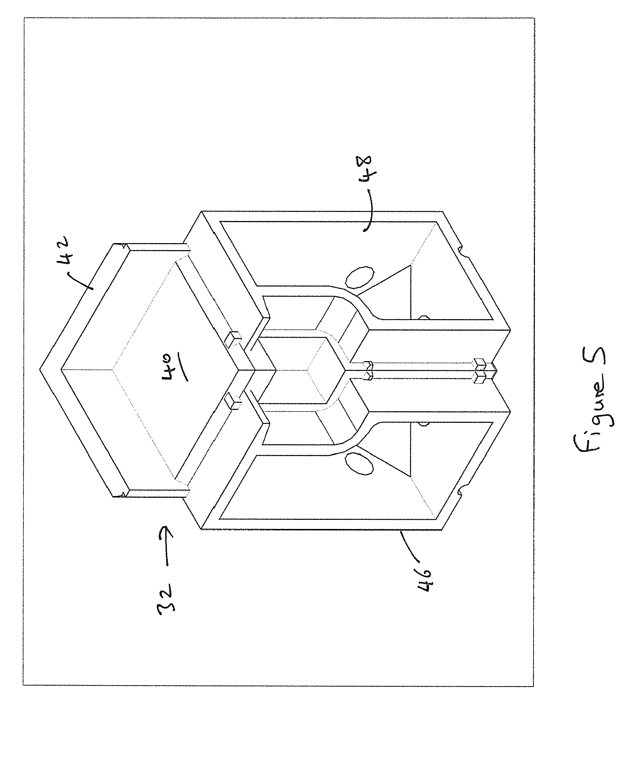

As can be seen from Figure 5, each corner block 32 comprises respective stubs or plugs 46,48 extending from adjacent faces of the corner block 32, said stubs or plugs 46,48 being shaped and dimensioned to be received with respective ends of adjacent side and end rails 24,26,28,30 of the frame 22 to facilitate coupling of the corner blocks 32 to the side and end rails. Once inserted into the ends of the side and end rails, the corner blocks 32 may be secured to the rails by welding or by suitable fasteners or adhesive. The stubs or plugs 46,48 define backing plates behind the adjacent end and side rails to provide material to weld to and to prevent welding material from pouring into the hollow bodies of the corner blocks and side and end rails.

In a preferred embodiment the side and end rails 24,26,28,30 of the frame 22 may be formed from metal, such as aluminium or steel, preferably via an extrusion or roll forming process, and the corner blocks 32 may be formed from a similar metal, preferably by casting, more preferably die-casting. Alternatively the side and end rails (and bracing rails) and/or the corner blocks may be formed from plastic.

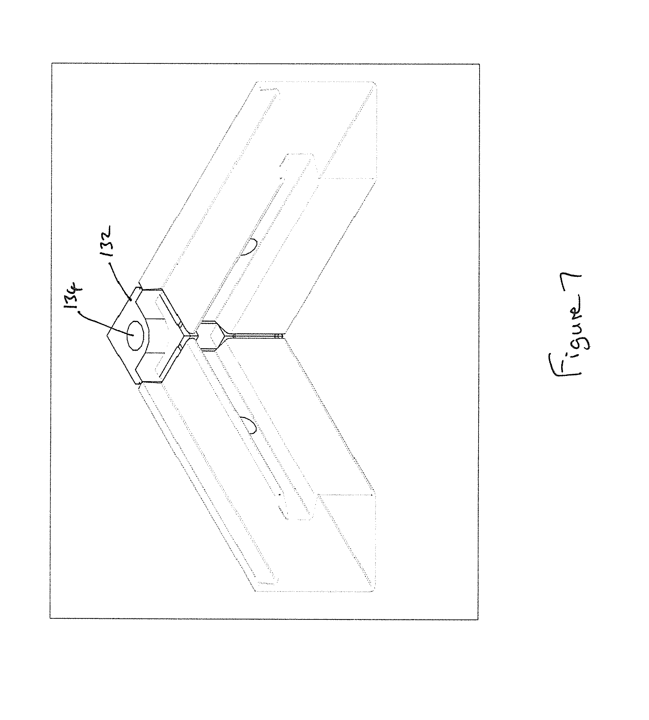

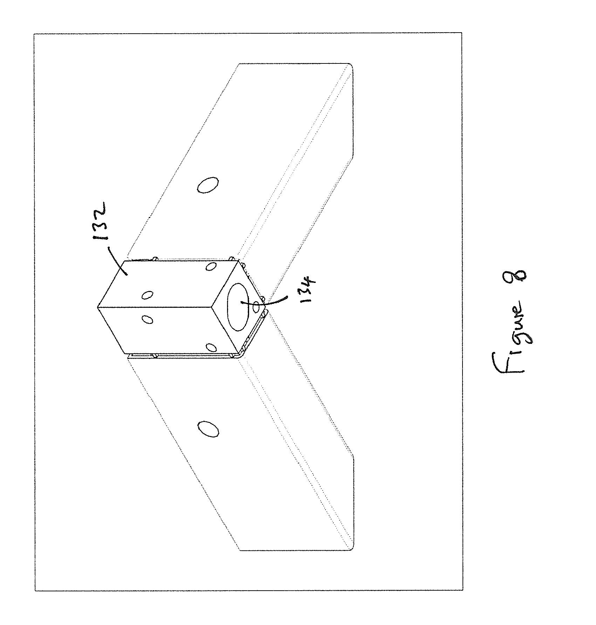

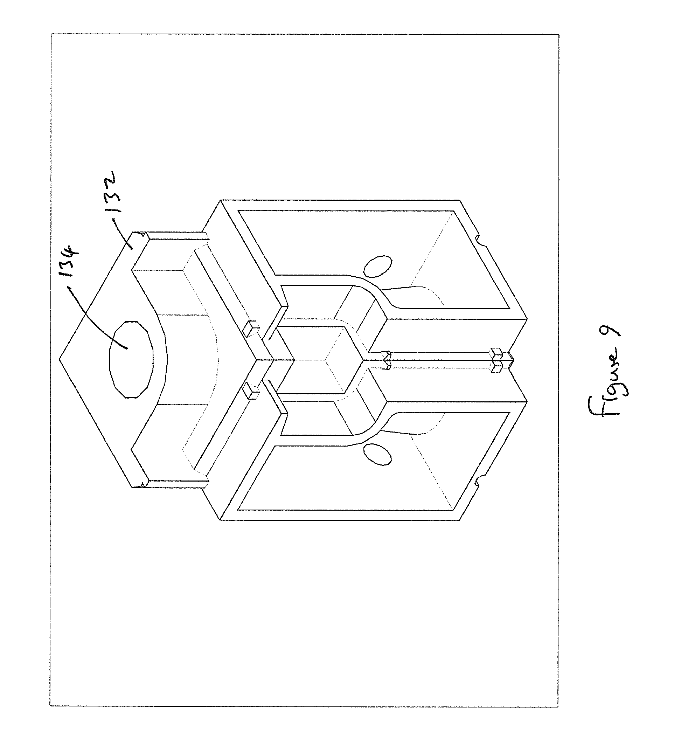

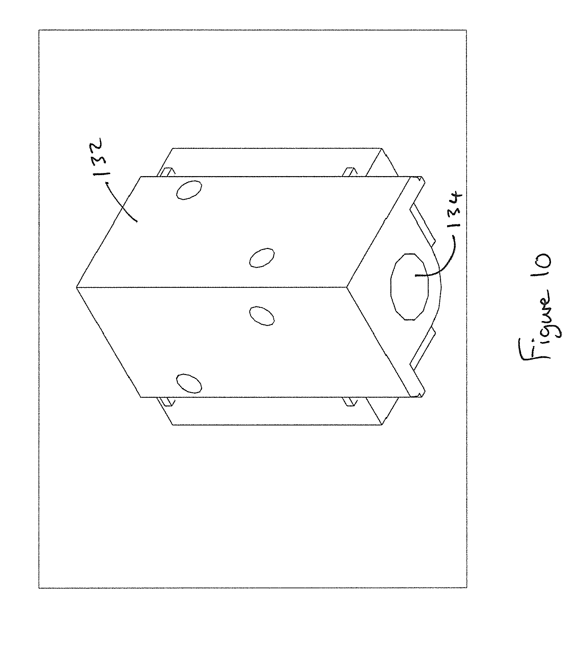

In an alternative embodiment, shown in Figures 7 to 10, each corner block 132 is formed with an elongate tie hole 134 formed therethrough, extending between the front and rear faces thereof for the insertion of ties or other fastening devices to allow panels 10 to be joined together and/or to permit other components to be attached to the panels. Such embodiment may be particularly applicable to smaller panels. In larger panels such tie holes may be provided in the rails of the frame 22.

The invention is not limited to the embodiment(s) described herein but can be amended or modified without departing from the scope of the present invention.

## Claims

1. A formwork panel comprising at least one covering sheet comprising a concrete engaging front face, the at least one covering sheet being supported on a frame secured on a rear side thereof to support and reinforce the sheet, said frame comprising first and second elongate, spaced apart and substantially parallel side rails and first and second elongate, spaced apart and substantially parallel end rails, said first and second side rails and first and second end rails defining, between them, a peripheral boundary of the frame, respective ends of said first and second side rails being joined to respective ends of said first and second ends rails by respect corner members, each corner member defining a corner region of the frame.

2. A panel as claimed in claim 1, wherein each corner member comprises a metal or plastic casting.

3. A panel as claimed in any preceding claim, wherein each of said first and second side rails and first and second end rails are formed from a metal, said corner members comprising metal castings, wherein the respective ends of the first and second side rails and first and second ends rails are joined to the respective corner members by welding.

4. A panel as claimed in claim 1 or claim 2, wherein said first and second side rails, first and second end rails and/or the corner members are formed from a plastic.

5. A panel as claimed in any preceding claim, wherein said first and second side rails and first and second end rails are formed via an extrusion or roll forming process.

6. A panel as claimed in any preceding claim, wherein each corner member comprises a substantially L shaped block having perpendicularly arranged end regions shaped and dimensioned to be received within the adjacent ends of respective side and end rails of the frame in the manner of a plug and socket to facilitate coupling of the corner members to the side and end rails.

7. A panel as claimed in any preceding claim, wherein at least one corner region of each corner member defining an outer corner of the frame is chamfered.

8. A panel as claimed in any preceding claim, wherein each corner member is provided with a hole or aperture therethrough.

9. A panel as claimed in any preceding claim, wherein an upstanding peripheral lip is provided adjacent an outer side of each corner member for protecting an outer edge of said at least one covering sheet.

10. A panel as claimed in claim 9, wherein the first and second side rails and first and second end rails define a front face for supporting said at least one covering sheet, said front face being provided with a peripheral lip extending along an outer edge thereof in alignment with said peripheral lip of the corner member, wherein said at least one covering sheet may rest against the frame within a protective boundary defined by the peripheral lips of said first and second side rails, first and second end rails and corner members, thus protecting an outer edge of said at least one covering sheet.

11. A panel as claimed in any preceding claim, wherein said first and second side rails and first and second end rails and/or corner members are provided with apertures and/or channels and/or grooves or other formations for the attachment of fasteners, clamps, props or other fixing means or components to enable adjacent panels to be joined together or attached to lifting or handling means or supports and/or to enable the at least one covering sheet to be secured to the frame.
